# EUROPÄISCHE PATENTSCHRIFT

(11) **EP 0 536 365 B1**
(45) Veröffentlichungstag und Bekanntmachung des Hinweises auf die Patenterteilung: **26.02.1997**
(21) Anmeldenummer: 92908930.8
(22) Anmeldetag: 24.04.1992
(51) Int. Cl.: B29C 47/00, B29C 47/54, B21C 23/21

(54) **PASTENEXTRUDER**
PASTE EXTRUDER
EXTRUDEUR DE PATE

(30) Priorität: 25.04.1991 DE 9105099 U
(43) Veröffentlichungstag der Anmeldung: 14.04.1993
(73) Patentinhaber: WK WOREK KUNSTSTOFFTECHNIK GmbH, D-91325 Adelsdorf (DE)
(72) Erfinder: PRENZEL, Karl, D-8540 Schwabach 7 (DE); BERGNER, Heinrich, D-8555 Adelsdorf (DE)
(74) Vertreter: Tergau, Enno, Dipl.-Ing.
(86) Internationale Anmeldenummer: DE9200326
(87) Internationale Veröffentlichungsnummer: WO9219435

(56) Entgegenhaltungen:
- AT-A- 326 898
- CH-A- 247 495
- DE-A- 684 338
- DE-A- 1 504 068
- DE-U- 9 011 448
- FR-A- 1 437 274
- US-A- 2 941 240
- US-A- 3 898 831

## Beschreibung

Die Erfindung betrifft einen Pastenextruder mit den im Oberbegriff des Anspruches 1 genannten Merkmalen.

Derartige Pastenextruder sind aus FR-A 1 437 274 und DE-A1 504 068 bekannt. Darin sind zum Herstellen von Hohlkörpern geeignete Extruderpressen beschrieben, bei denen der Extrusionsantrieb für den Extrusionskolben ein Hydraulikzylinder ist, dessen Hydraulikkolben mit dem Extrusionskolben verbunden ist. Der Extrusionskolben sowie der Hydraulikkolben sind im Zentrum hohl ausgebildet. In den beiden miteinander fluchtend verbundenen Hohlräumen der genannten Kolben ist eine Dornzugstange in längsaxialer Richtung verschiebbar angeordnet. Das innerhalb des Hydraulikkolbens angeordnete Ende der Dornzugstange ist kolbenartig verdickt und liegt mit seinem Außenumfang dichtend an der Innenwandung des Hydraulikkolbens an. Durch entsprechende Beaufschlagung mit einem Hydraulikmedium ist die Dornzugstange in längsaxialer Richtung verschiebbar. Nachteilig bei den bekannten Extrudern ist, daß die Dornzugstange beim Aus- und Einfahren des Hydraulikkolbens zwangsläufig mitbewegt wird. Der Hydraulikkolben kann daher nicht unabhängig von der Dornzugstange bewegt werden.

Davon ausgehend ist es die Aufgabe der Erfindung, einen Extruder vorzuschlagen, bei dem dieser Nachteil umgangen ist.

Diese Aufgabe wird erfindungsgemäß dadurch gelöst, daß der Positionierantrieb für den Dorn (bzw. die Dornstange) ein separater, d.h. ein zylindrisches Gehäuse und einen darin längsaxial verschiebbaren Kolben aufweisender, Hydraulikzylinder ist, der im Zentrum eines Gehäuses angeordnet und von dem als Hohlzylinder ausgebildeten Abtriebsteil des Extrusionsantriebes umgeben ist. Durch diese Anordnung ist es möglich, daß der Extrusionskolben aus- bzw. eingefahren werden kann, ohne daß die Dornzugstange bzw. der Dorn mitbewegt wird. Die Variationsmöglichkeit der verschiedenen Relativanordnungen von Dorn und Extrusionskolben ist dadurch gegenüber den bekannten Extruderpressen wesentlich erhöht.

Beispielsweise ist es bei der Herstellung von längeren Hohlprofilen unter Verwendung mehrerer Vorformkörper vorteilhaft, zum Nachladen eines neuen Vorformkörpers nur den Extrusionskolben aus dem Extrusionszylinder herauszufahren und die Dornzugstange dort in unveränderter Position zu belassen. Zum Nachladen werden dann entweder aus zwei Hälften bestehende Vorformkörper verwendet oder die Dornzugstange wird aus zwei lösbar miteinander verbundenen Teilstücken zusammengesetzt. Zum Nachladen eines neuen Vorformkörpers werden die Teilstücke getrennt, wobei das eine Teilstück im Extrusionszylinder bleibt und das andere zusammen mit dem Extrusionskolben verschwenkt wird. Wird dagegen so verfahren, daß die Dornzugstange aus dem Extrusionszylinder herausgezogen, dieser mit einem neuen Vorformkörper beschickt und anschließend die Dornzugstange in den Durchgangskanal des Vorformkörpers eingeführt wird, besteht die Gefahr, daß die Dornzugstange insbesondere aufgrund einer schwerkraftbedingten Absenkung ihres Freiendes Material von der Innenwandung des genannten Durchgangskanals abhobelt und in den Hohlraum des extrudierten Hohlprofils hineinschiebt. Diese Gefahr ist umso größer, je länger der Extrusionszylinder bzw. der in ihn eintauchende Abschnitt der Dornzugstange ist. Das abgehobelte Material würde insbesondere durch einen sich an die Extrusion anschließenden Sinterprozeß auf der Innenwandung des Hohlprofils fixiert werden und würde eine Unebenheit bilden. Dies ist nicht nur bei Rohren unerwünscht.

In den Unteranspruchen sind vorteilhafte Ausgestaltungen des erfindungsgemäßen Pastenextruders angegeben.

Die erfindungsgemäß kompakte Bauweise ist bei Vorhandensein zusätzlicher Antriebs- und Positioniermittel beispielsweise nach Anspruch 5 von zunehmender Bedeutung. Wichtig ist überhaupt, daß der Pastenextruder bezogen auf seine in Extrusionsrichtung verlaufende Längsachse radial wenig auslädt.

Die Maßnahme nach Anspruch 8 ermöglicht darüber hinaus eine geringe Baulänge trotz Nachladbarkeit des Extrusionszylinders nach Art eines Hinterladers. Dabei begünstigt auch die geringe Baubreite oder Bauhöhe den Raumbedarf des Pastenextruders, wenn nämlich seine Bauteile in Ausschwenkstellung nicht all zu sehr über die Abmessungen in Betriebsstellung hinausstehen. Um den für das Nachladen des Vorformkörpers von hinten in den Extrusionszylinder erforderlichen, in Axialrichtung wirksamen Freiraum bereitzustellen, braucht der Extrusionskolben nur so weit aus dem Extrusionszylinder herausgezogen zu werden, daß der Dorn gerade außerhalb des Extrusionszylinders liegt. Dann reicht eine vergleichsweise geringfügige Schwenkung der gesamten Antriebseinheit, um den für das Nachladen eines Vorformkörpers von der Antriebsseite her erforderlichen Freiraum zur Verfügung zu stellen.

Durch Anspruch 9 ist gewährleistet, daß in Ausschwenkstellung die Antriebseinheit mit ihren Enden etwa um die selbe radiale Erstreckung aus der Mittellage ausgeschwenkt ist.

Anspruch 10 in Besonderheit der Ausgestaltung nach Anspruch 11 ermöglicht die Verwendung vergleichsweise schwacher Schwenkantriebe. Außerdem erleichtert dies eine genaue Einjustierung des Extrusionskolbens vor seiner Rück-Einführung in den Extrusionszylinder zum Beginn eines neuen Extrusionsvorganges. Die Möglichkeit überhaupt eines genauen derartigen Einjustierens ist für den Dauerbetrieb eines derartigen Pastenextruders von besonderer Bedeutung. Dieses genaue Einjustieren wird durch die Ansprüche 8 und 9 weiterhin erleichtert. Für diese wichtige, genaue Justierbarkeit ist die kompakte Bauweise des Erfindungsgegenstandes von besonderer Bedeutung. Dadurch sind die zu Justierzwecken zu bewegenden Massen in günstiger Nähe zur Schwenkachse angeordnet.

Der Gegenstand der Erfindung wird anhand von in den Figuren dargestellten Ausführungsbeispielen näher erläutert. Es zeigen:
- Fig. 1: die Seitenansicht einer Ausführungsform eines Pastenextruders mit horzizontaler Vorschubrichtung des Extrusionskolbens und mit sowohl in Extrusions- als auch in Ausschwenkstellung dargestellter Extrusionskolben-Antriebseinheit,
- Fig. 2: einen Pastenextruder gemäß Fig. 1 im Längsschnitt,
- Fig. 3: einen Querschnitt gemäß der Linie A-A in Fig. 2, und
- Fig. 4: eine weitere Ausführungsform eines erfindungsgemäßen Pastenextruders im Längsschnitt.

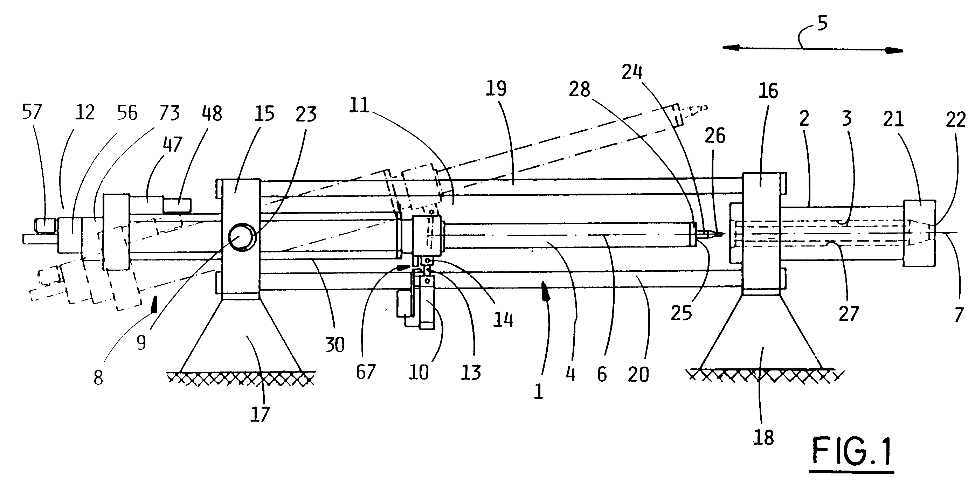

Wie aus Fig. 1 hervorgeht, besteht der Pastenextruder im wesentlichen aus einem im Maschinengestell 1 fixierten Extrusionszylinder 2 zur Aufnahme eines zu extrudierenden Vorformkörpers 3 und einem in den Extrusionszylinder 2 einfahrbaren Extrusionskolben 4. Die Einfahr- bzw. Vorschubrichtung 5 des Extrusionskolbens 4 verläuft parallel zu dessen Mittellängsachse 6 bzw. zur Mittellängsachse 7 des Extrusionszylinders 2.

Der Antrieb des Extrusionskolbens 4 erfolgt durch eine insgesamt mit 8 bezeichnete Antriebseinheit, die dem Extrusionszylinder 2 abgewandt hinter dem Extrusionskolben 4 angeordnet und im Maschinengestell 1 um eine Schwenkachse 9 schwenkbar ist. Die Schwenkachse 9 verläuft etwa vertikal zur Bildebene von Fig. 1, also rechtwinklig zur Mittellängsachse 6 des Extrusionskolbens 4 und etwa horizontal. Sie ist etwa mittig zwischen Vorder- 11 und Rückende 12 der Antriebseinheit positioniert, so daß die Antriebseinheit 8 mit dem Extrusionskolben 4 wie ein zweiarmiger Hebel bzw. wie eine Wippe wirkt. Für den Schwenkantrieb der Antriebseinheit 8 ist ein mit seinem Festende am Maschinengestell 1 fixierter Druckzylinder 10 vorgesehen, der in Radialrichtung am Vorderende 11 der Antriebseinheit 8 angreift. Die Kolbenstange 13 des Druckzylinders 10 ist über ein Schwenkauge 14 mit der Antriebseinheit 8 verbunden.

Das Maschinengestell 1 besteht im wesentlichen aus zwei mit Abstand parallel zueinander und rechtwinklig zur Mittellängsachse 6 des Extrusionskolbens 4 angeordneten etwa quadratischen Rahmengestellen 15 und 16, die jeweils von einem Fußgestell 17 und 18 unterstützt sind. Die Rahmengestelle 15,16 sind mit vier, jeweils an ihren Ecken angeordneten Längstraversen 19,20 miteinander verbunden.

Der Extrusionszylinder 2 ist mit seinem dem Extrusionskolben 4 zugewandten Rückende zentral im vorderen Rahmengestell 16 angeordnet und dort fixiert. An seinem Vorderende ist ein Extrusionsmundstück 21 mit einer den Außendurchmesser eines zu extrudierenen Hohlprofils bestimmenden Extrusionsdüse 22 angeordnet.

Die Antriebseinheit 8 ist bezogen auf ihr Vorder- 11 und Rückende 12 etwa mittig im hinteren Rahmengestell 15 angeordnet und dort mit ihrer Schwenkachse 9 in Lagern 23 gelagert. Die Lager 23 sind außen am Rahmengestell 15 befestigt und sind zur Justierung der Schwenkachse 9 nach Art von Exzenterringen ausgebildet. Zur Befestigung der aus zwei Hälften 9',9''bestehenden Schwenkachse 9 am Gehäuse 30 ist an dessen Umfang ein Ringflansch 29 angeformt. Dieser ist mit zwei diametral gegenüberliegenden sacklochförmigen Ausnehmungen 37,38 versehen, in denen die Achsenhälften 9',9'' mit ihren dem Gehäuse 30 zugewandten Enden fixiert sind.

Zentral im Extrusionskolben 4 ist eine Dornzugstange 24 koaxial verschiebbar gelagert. Sie steht mit ihrem Vorderende aus der stirnseitigen Druckfläche 25 des Extrusionskolbens 4 heraus und ist dort lösbar mit einem Dorn 26 verbunden.
Auf der Druckfläche 25 des Extrusionskolbens 4 ist eine mit der Innenfläche 27 des Extrusionszylinders 2 zusammenwirkende Dichtscheibe 28 angeordnet.

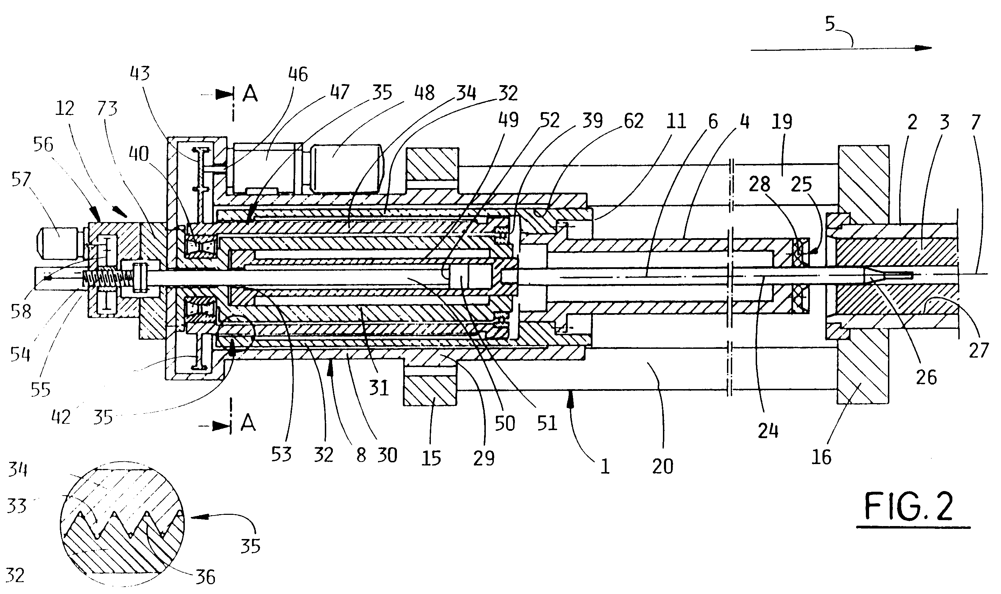

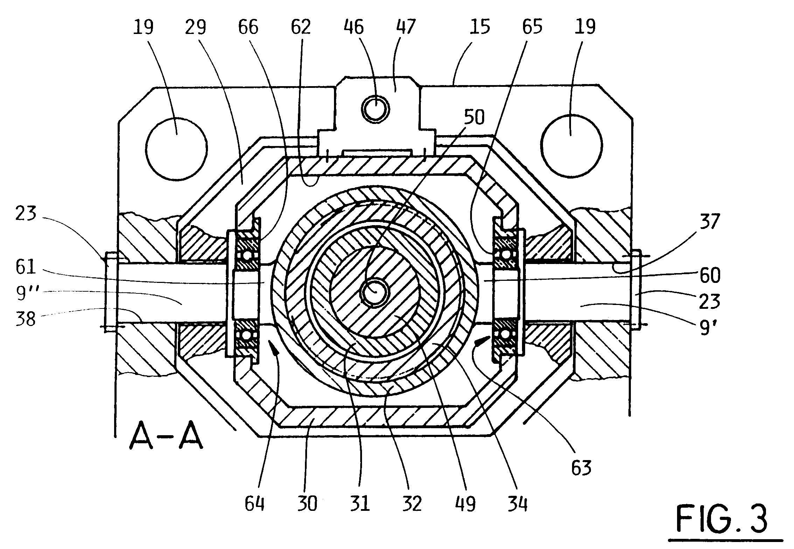

Der Aufbau der Antriebseinheit 8 wird anhand Fig. 2 und Fig. 3 näher erläutert. Die Antriebseinheit 8 enthält ein Gehäuse 30, in dem der Extrusionsantrieb für den Extrusionszylinder 4 sowie der Positionierantrieb für die axial verschiebbare Dornzugstange 24 bzw. dem an ihrem Vorderende angeordneten Dorn 26.

Der Positionierantrieb für die Dornzugstange 24 bzw. den Dorn 26 ist ein Hydraulikzylinder 31, der zentral innerhalb des Gehäuses 30 und koaxial zur Mittellängsachse 6 des Extrusionszylinders 4 angeordnet ist. Das Abtriebsteil für den Extrusionsantrieb ist ein Hohlzylinder 32, der den Hydraulikzylinder 31 koaxial umgibt und an seinem Vorderende mit dem Extrusionskolben 4 verbunden ist. Zwischen Hydraulikzylinder 31 und dem Hohlzylinder 32 ist eine mit einem Außengewinde 33 versehene Hohlspindel 34 angeordnet. Das dem Extrusionskolben 4 abgewandte Rückende 35 des Hohlzylinders 32 weist ein Innengewinde 36 auf, das mit dem Außengewinde 33 der Hohlspindel 34 im Sinne eines Spindeltriebes im Eingriff steht. Die Hohlspindel 34 ist an ihrem Vorder- und Rückende mit Wälzlagern 39,40 gelagert, die sich am Gehäuse des Hydraulikzylinder 31 abstützen. An ihrem Rückende ist ein von ihrem Umfang radial abstehendes Stirnrad 42 fixiert, das antriebsmäßig mit einem Stirnrad 43 im Eingriff steht. Dieses Stirnrad 43 ist über eine durch das Gehäuse 30 nach außen geführte Antriebswelle 46 unter Zwischenschaltung eines Getriebes 47 mit einem Elektromotor 48 verbunden. Getriebe 47 und Elektromotor 48 sind an der Außenseite des Gehäuses 30 in längsaxialer Ausrichtung fixiert.

Der Kolben 49 des Hydraulikzylinders 31 ist als Hohlkolben ausgebildet. Zentral in seinem Innern ist eine Stange 50 koaxial verschiebbar angeordnet, deren dem Extrusionszylinder 2 zugewandtes Vorderende 51 eine Anschlagfläche 52 aufweist, die mit dem antriebsseitigen Innenringkragen 53 des Kolbens 49 zusammenwirkt. Das der Anschlagfläche 52 abgewandte Verstellende 54 der Stange 50 ist mit einem Außengewinde 55 versehen und durch das Gehäuse 30 nach außen geführt. Der Verstellantrieb 56 für die Stange 50 ist and der hinteren Stirnseite des Gehäuses 30 angeflanscht. Er enthält einen Elektromotor 57 und ein nach Art eines Schraubentriebs mit dem Außengewinde 55 der Stange 50 zusammenwirkendes Getriebe 58.

Das als Hohlzylinder 32 ausgebildete Abtriebsteil des Extrusionsantriebs weist an seinem Rückende 35 zwei sich diametral gegenüberliegende, von seinem Umfang radial abstehende, zu seiner Drehfixierung dienende Fortsätze 60,61 (Fig. 3) auf. Diese sind in an der Innenwand 62 des Gehäuses 30 angeordneten und parallel zur Längsmittelachse 6 des Extrusionskolbens 4 verlaufenden Führungsschienen 63,64 geführt. Die Fortsätze 60,61 sind in den Führungsschienen 64,64 mit Wälzlagern 65,66 gelagert.

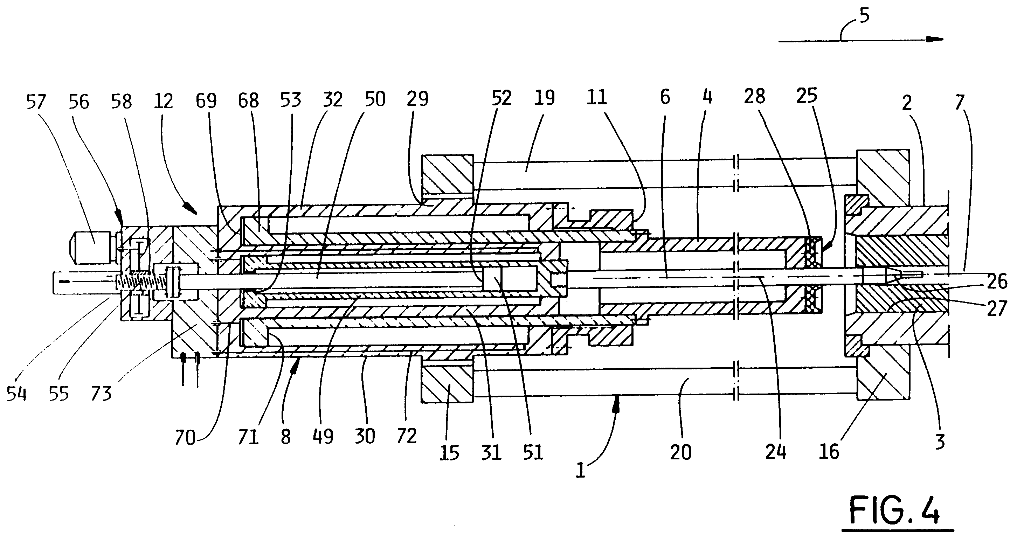

In Fig. 4 ist eine Ausführungsform eines Pastenextruders dargestellt, bei der das ebenfalls als Hohlzylinder 32 ausgebildete Abtriebsteil für den Extrusionskolben 4 nicht durch einen Spindelantrieb, sondern hydraulisch angetrieben wird. Dazu weist der Hohlzylinder 32 an seinem Rückende 35 einen von seinem Außenumfang radial abstehenden Ringflansch 68 auf. Dieser ist nach Art eines Hydraulikkolbens in das im Querschnitt kreisrunde Gehäuse 30 dichtend eingepaßt. Zum Vorschub des Extrusionskolbens 4 ist die rückwärtige Stirnfläche 69 des Ringflansches 68 über die Zuleitung 70 mit Drucköl beaufschlagbar. Für den Rückhub ist die der Stirnfläche 69 abgewandte Innenringfläche 71 des Ringflansches 68 mit Drucköl über die Zuleitung 72 beaufschlagbar. Zwischen dem Verstellantrieb 56 und dem Gehäuse 30 ist zur Steuerung des hydraulischen Antriebs eine Steuerplatte 73 angeordnet. Eine derartige Steuerplatte 73 ist auch bei der in den Figuren 1 - 3 gezeigten Ausführungsform vorhanden.

Der Außenumfang des als Positionierantrieb für die Dornzugstange 24 dienenden Hydraulikzylinders 31 und die Innenumfangsfläche des Hohlzylinders 32 wirken im Sinne eines Gleitlagers zusammen.

Zum Nachladen eines Vorformkörpers 3 in den Extrusionszylinder 2 wird zunächst der Extrusionskolben 4 in seine rückwärtige Ausgangsstellung zurückgezogen. In dieser zurückgezogenen Stellung befindet sich das Vorderende des Extrusionskolbens 4 außerhalb des Extrusionszylinders 2. Anschließend oder auch gleichzeitig mit dem Zurückziehen des Extrusionskolbens 4 wird die Dornzugstange 24 zusammen mit Dorn 26 ebenfalls so weit zurückgezogen, daß sich der Dorn 26 außerhalb des Extrusionszylinders 2 befindet. Dann wird der Druckzylinder 10 betätigt. Seine Kolbenstange 13 fährt aus und schwenkt die Antriebseinheit 8 gemeinsam mit dem Extrusionskolben 4 um die Schwenkachse 9, so daß Antriebseinheit 8 und Extrusionskolben 4 die in Fig. 1 gestrichelt dargestellte Ausschwenkstellung einnehmen. Die Schwenkung erfolgt um einen Winkel von etwa 20°. Dieser Schwenkwinkel reicht aus, um genügend Platz im rückwärtigen Bereich des Extrusionszylinders 2 für den nach Art eines Hinterladers in den Extrusionszylinder 2 einzuführenden Formkörpers 3 bereitzustellen.

Nach Einführung des Formkörpers 3 in den Extrusionszylinder 2 wird durch Zurückfahren der Kolbenstange 13 des Druckzylinders 10 die Antriebseinheit 8 bzw. der Extrusionskolben 4 wieder in Extrusionsstellung gebracht. In dieser Stellung muß der Extrusionskolben 4 so ausgerichtet sein, daß seine Mittellängsachse 6 mit der Mittellängsachse 7 des Extrusionszylinders 2 in einer Linie fluchtend verläuft. Eine z.B. etwa infolge einer leichten Durchbiegung des Extrusionskolbens 4 nötige Nachjustierung in Vertikalrichtung kann mit einer nahe dem Druckzylinder 10 am Maschinengestell 1 angeordneten Vertikal-Justiereinrichtung 67 erfolgen.

Abschließend sei noch bemerkt, daß der erfindungsgemäße Pastenextruder sowohl mit horizontaler als auch mit vertikaler Extrusionsrichtung betrieben werden kann.

### Bezugszeichenliste

- 1: Maschinengestell
- 2: Extrusionszylinder
- 3: Vorformkörper
- 4: Extrusionskolben
- 5: Vorschubrichtung
- 6: Mittellängsachse
- 7: Mittellängsachse
- 8: Antriebseinheit
- 9: Schwenkachse
- 9', 9'': Hälfte
- 10: Druckzylinder
- 11: Vorderende
- 12: Rückende
- 13: Kolbenstange
- 14: Schwenkauge
- 15: Rahmengestell
- 16: Rahmengestell
- 17: Fußgestell
- 18: Fußgestell
- 19: Längstraverse
- 20: Längstraverse
- 21: Extrusionsmundstück
- 22: Extrusionsdüse
- 23: Lager
- 24: Dornzugstange
- 25: Druckfläche
- 26: Dorn
- 27: Innenfläche
- 28: Dichtscheibe
- 30: Gehäuse
- 31: Hydraulikzylinder
- 32: Hohlzylinder
- 33: Außengewinde
- 34: Hohlspindel
- 35: Rückende
- 36: Innengewinde
- 37: Ausnehmung
- 38: Ausnehmung
- 39: Wälzlager
- 40: Wälzlager
- 42: Stirnrad
- 43: Stirnrad
- 46: Antriebswelle
- 47: Getriebe
- 48: Elektromotor
- 49: Kolben
- 50: Stange
- 51: Vorderende
- 52: Anschlagfläche
- 53: Innenringkragen
- 54: Verstellende
- 55: Außengewinde
- 56: Verstellantrieb
- 57: Elektromotor
- 58: Getriebe
- 60: Fortsatz
- 61: Fortsatz
- 62: Innenwand
- 63: Führungsschiene
- 64: Führungsschiene
- 65: Wälzlager
- 66: Wälzlager
- 67: Justiereinrichtung
- 68: Ringflansch
- 69: Stirnfläche
- 70: Zuleitung
- 71: Innenringfläche
- 72: Zuleitung
- 73: Steuerplatte

## Patentansprüche

1. Pastenextruder zum Herstellen von Hohlprofilen, z.B. von Rohren oder Schläuchen aus Kunststoffen, insbesondere aus Polytetrafluoräthylen (PTFE),
mit einem Maschinengestell (1) und daran
- einem ein Extrusionsmundstück (21) tragenden Extrusionszylinder (2) zur Aufnahme eines aus zu extrudierendem Kunststoff bestehenden Vorformkörpers (3) und
- einem Extrusionsantrieb für einen in den Extrusionszylinder (2) einfahrbaren und dadurch die Kunststoff-Extrusion bewirkenden Extrusionskolben (4) sowie
mit einer im Extrusionskolben (4) axial verschiebbar gelagerten und durch einen Positionierantrieb verschiebbaren Dornzugstange (24) für die Positionierung eines an ihrem Ende fixierten, mit dem Extrusionsmundstück (21) zur Profilbildung zusammenwirkenden Dornes (26), wobei der Extrusionsantrieb und der Positionierantrieb in einem gemeinsamen Gehäuse (30) angeordnet sind, in welchem der Extrusionsantrieb den Positionierantrieb kapselartig und koaxial umgibt,
dadurch gekennzeichnet,
daß das Abtriebsteil des Extrusionsantriebes ein Hohlzylinder (32) ist, der den als Hydraulikzylinder (31) ausgebildeten Positionierantrieb des Dornes (26) umgibt.

2. Pastenextruder nach Anspruch 1
dadurch gekennzeichnet,
daß der Hohlzylinder (32) durch einen Gewindeantrieb axial antreibbar ist.

3. Pastenextruder nach Anspruch 1
dadurch gekennzeichnet,
daß der Hohlzylinder (32) durch einen Hydraulikantrieb axial antreibbar ist.

4. Pastenextruder nach einem oder mehreren der vorhergehenden Ansprüche
dadurch gekennzeichnet,
daß der Positionierantrieb einen hydraulisch antreibbaren Kolben (49)enthält.

5. Pastenextruder nach Anspruch 4
gekennzeichnet durch
einen den Hub des Kolbens (49) limitierenden Verstellanschlag (Anschlagfläche 52).

6. Pastenextruder nach Anspruch 5
dadurch gekennzeichnet,
daß der Kolben (49) ein Hohlkolben ist, auf dessen antriebsseitigen Innenringkragen (53) der motorisch in Axialrichtung antreibbare Verstellanschlag (Anschlagfläche 52) einwirkt.

7. Pastenextruder nach Anspruch 5 oder 6
dadurch gekennzeichnet,
daß der Verstellanschlag (Anschlagfläche 52) durch einen antriebsseitig an das Gehäuse (30) angeflanschten, mit den anderen Antrieben koaxialen Spindelantrieb verstellbar ist.

8. Pastenextruder nach einem oder mehreren der vorhergehenden Ansprüche
dadurch gekennzeichnet,
daß das gemeinsame Gehäuse (30) mit seinen Antrieben bei aus dem Extrusionszylinder (2) zurückgezogenem Extrusionskolben (4) um eine zu dessen Längsachse (6) etwa rechtwinklige Schwenkachse (9) schwenkbar ist derart, daß der Extrusionszylinder (2) ungehindert nach Art eines Hinterladers mit dem Vorformkörper (3) beladbar ist.

9. Pastenextruder nach Anspruch 8
dadurch gekennzeichnet,
daß die Schwenkachse (9) etwa mittig zwischen den Axialenden des Gehäuses (30) mit seinen Antrieben angeordnet ist.

10. Pastenextruder nach Anspruch 8 oder 9
gekennzeichnet durch
etwa eine Horizontallage der Schwenkachse (9).

11. Pastenextruder nach Anspruch 10
gekennzeichnet durch
eine Axialposition der Schwenkachse (9) derart, daß die beiderseits der Schwenkachse (9) befindlichen Massen des Gehäuses (30) mit seinen Antrieben gewichtsmäßig ausbalanciert sind.

12. Pastenextruder nach einem der Ansprüche 8 bis 11,
gekennzeichnet durch
einen motorischen, insbesondere einen hydraulischen Schwenkantrieb (Druckzylinder 10).

13. Pastenextruder nach einem der Ansprüche 8 bis 12
gekennzeichnet durch
eine Justierzwecken dienende Verstellbarkeit der Schwenkachse innerhalb des Maschinengestells.

14. Pastenextruder nach einem der Ansprüche 8 bis 13
gekennzeichnet durch
eine Justierzwecken dienende Verstelleinrichtung zur Veränderung der Schwenklage des Gehäuses gegenüber dem Maschinengestell.

## Claims

1. A paste extruder for making hollow profiles, for example for plastic pipes or hoses, particularly of polytetrafluorethylene (PTFE), comprising
a machine stand (1) having
- an extrusion cylinder (2) carrying an extrusion mouthpiece (21) for receiving a preform (3) of plastic material to be extruded, and
- an extrusion drive for an extrusion piston (4) advanceable into extrusion cylinder (2) and thus effecting the extrusion of the plastic material, as well as
a mandrel pulling rod (24) mounted in, and by means of a positioning drive axially displaceable relative to, said extrusion piston (4) for positioning a mandrel (26) which is attached to the end of said mandrel pulling rod and cooperates with the extrusion mouthpiece (21) for forming the profile, the extrusion drive and the positioning drive being disposed in a common housing (30) in which the extrusion drive surrounds the positioning drive coaxially and like a capsule,
characterized in that
the driven member of the extrusion drive is a hollow cylinder (32) surrounding the hydraulic cylinder (31) constituting the positioning drive of the mandrel (26).

2. Paste extruder according to claim 1,
characterized in that
the hollow cylinder (32) is axially drivable by means of a thread drive.

3. Paste extruder according to claim 1,
characterized in that
the hollow cylinder (32) is axially drivable by means of a hydraulic drive.

4. Paste extruder according to any or several of the preceding claims,
characterized in that
the positioning drive contains a hydraulically drivable piston (49).

5. Paste extruder according to clam 4,
characterized by
an adjustment stop (abutment face 52) limiting the stroke of the piston (49).

6. Paste extruder according to claim 5,
characterized in that
the the piston (49) is a hollow pistion upon whose drive-side interior ring collar (53) acts the adjustment stop (abutment face 52), which can be driven in axial direction by a motor.

7. Paste extruder according to claim 5 or 6,
characterized in that
the adjustment stop (abutment face 52) is adjustable by a spindle drive which is flanged to the drive side of the housing (30) and is coaxial with the other drives.

8. Paste extruder according to any or several of the preceding claims,
characterized in that
the common housing (30) with its drives is pivotable, when the extrusion piston (4) has been retracted from the extrusion cylinder (2), about a pivot shaft (9), disposed approximately at a right angle to the longitudinal axis (6) of the extrusion piston, so that the extrusion cylinder (2) can be charged unobstructedly with the preform (3) in the manner of a breech loader.

9. Paste extruder according to claim 8,
characterized in that
the pivot shaft (9) is disposed approximately midway between the axial ends of the housing (30) with its drives.

10. Paste extruder according to claim 8 or 9,
characterized by
an approximately horizontal position of the pivot shaft (9).

11. Paste extruder according to clam 10,
characterized by
such an axial position of the pivot shaft (9) that the masses of the housing (30) with its drives, arranged on either side of the pivot shaft (9), are balanced as to weight.

12. Paste extruder according to any of clams 8 to 11,
characterized by
a motor-driven, in particular a hydraulic pivot drive (pressure cylinder 10).

13. Paste extruder according to any of claims 8 to 12,
characterized by
an adjustability of the piston shaft within the machine stand, serving for adjustment purposes.

14. Paste extruder according to any of claims 8 to 13,
characterized by
an adjustment device for changing the pivoted position of the housing relative to the machine stand, serving for adjustment purposes.

## Revendications

1. Extrudeuse pâteuse pour la fabrication de profilés creux comme par exemple des tuyaux ou des tubes en matière synthétique, particulièrement en polytetrafluorethylène (PTFE),
avec un cadre de machine (1) et fixés dessus
- un cylindre d'extrusion (2) portant une filière de sortie (21) prévu pour recevoir une préforme extrudable (3) en matière synthétique et
- un entrainement d'extrusion pénétrant dans un fourreau d'extrusion (2) et pouvant ainsi extruder la matière synthétique par l'intermédiaire d'un piston d'extrusion (4) ainsi qu'avec
une tige porte-poinçon (24) pouvant être axialement déplacée, guidée dans le piston d'extrusion (4), portant un entrainement de positionnement permettant une position relative exacte avec la filière d'extrusion (21) pour former le produit avec le poinçon (26). L'entrainement de l'extrudeuse et l'entrainement de positionnement du poinçon se trouvent dans un carter commun (30) dans lequel l'entrainement d'extrusion chapote l'entrainement de positionnement co-axialement
caractérisé par
le fait que la partie mobile de l'entrainement d'extrusion soit un cylindre creux (32) qui englobe l'entrainement de positionnement sous forme de vérin hydraulique (31) du poinçon (26).

2. Extrudeuse pateuse suivant revendication 1
caractérisé par
le fait que le cylindre creux (32) est entrainé axialement par un système de vis écrou.

3. Extrudeuse pâteuse suivant revendication 1
caractérisé par
le fait que le cylindre creux (32) est entrainé axialement par un entrainement hydraulique.

4. Extrudeuse pâteuse suivant une ou plusieurs des revendications ci-dessus
caractérisé par
le fait que l'entrainement de positionnement renferme un piston (49) à commande hydraulique.

5. Extrudeuse pâteuse suivant revendication 4
caractérisé par
le fait que le déplacement du piston (49) est limité par une butée (surface de contact 52).

6. Extrudeuse pâteuse suivant revendication 5
caractérisé par
le fait que le piston (49) est un piston creux sur lequel agit le système de déplacement axial de la butée (surface de contact 52)

7. Extrudeuse pâteuse suivant revendications 5 ou 6
caractérisé par
le fait que le système de déplacement axial (surface de contact 52) est entrainé par une vis écrou montée co-axialement sur le carter (30).

8. Extrudeuse pâteuse suivant une ou plusieurs des revendications ci-dessus
caractérisé par
le fait que le carter commun (30) avec ses entrainements peut être pivoté radialement autour de son axe longitudinal (6) dans un axe de rotation (9) à angle droit lorsque le piston d'extrusion (4) est retiré du fourreau d'extrusion (2) de telle façon que le fourreau d'extrusion (2) puisse être chargé avec des préformes (3) par l'arrière.

9. Extrudeuse pâteuse suivant revendication 8
caractérisé par
le fait que l'axe de pivotement (9) est disposé au milieu entre les bouts axiaux du carter (30) par les entrainements.

10. Extrudeuse pâteuse suivant revendications 8 ou 9
caractérisé par
un positionnement horizontal de l'axe de pivotement (9).

11. Extrudeuse pâteuse suivant revendication 10
caractérisé par
un positionnement axial de l'axe de rotation (9) de telle façon que les masses se trouvent des deux côtés de l'axe de rotation (9) du carter (30) et que ses entrainements soient équilibrés.

12. Extrudeuse pâteuse suivant l'une des revendications 8 à 11
caractérisé par
un entrainement motorisé particulièrement un entrainement hydraulique du mouvement de rotation (vérin hydraulique 10).

13. Extrudeuse pâteuse suivant l'une des revendications 8 à 12
caractérisé par
un réglage de l'axe de rotation dans le cadre de la machine

14. Extrudeuse pâteuse suivant l'une des revendications 8 à 13
caractérisé par
la possibilité de réglage permettant de prolonger la rotation par rapport au cadre de la machine.
